# EUROPEAN PATENT SPECIFICATION

(11) **EP 3 349 318 B1**
(45) Date of publication and mention of the grant of the patent: **11.11.2020**
(21) Application number: 16843645.9
(22) Date of filing: 07.09.2016
(51) Int. Cl.: H01C 7/12, H02H 9/04, H01C 7/02

(54) **SURGE PROTECTION DEVICE BASE**
ÜBERSPANNUNGSSCHUTZVORRICHTUNGSBASIS
SOCLE DE DISPOSITIF DE PROTECTION CONTRE LES SURTENSIONS

(30) Priority: 07.09.2015 CN 201510563345
(43) Date of publication of application: 18.07.2018
(73) Proprietor: Seari Electric Technology Co., Ltd., Shanghai 200063 (CN); Shanghai Noark Electric Co., Ltd., Shanghai 201614 (CN); Zhejiang Chint Electrics Co., Ltd., Yueqing, Zhejiang 325603 (CN)
(72) Inventor: YANG, Fan, Shanghai 200063 (CN); JIN, Jianrong, Shanghai 200063 (CN); LI, Renjie, Shanghai 200063 (CN); CAO, Yang, Shanghai 200063 (CN)
(74) Representative: Osha Liang
(86) International application number: PCT/CN2016/098276
(87) International publication number: WO 2017/041707

(56) References cited:
- EP-B1- 1 737 091
- EP-B1- 2 880 725
- CN-A- 101 651 314
- CN-A- 104 810 814
- CN-U- 201 541 097
- CN-U- 202 737 113
- CN-U- 202 737 113
- CN-U- 202 759 222
- CN-U- 203 895 966
- CN-Y- 200 941 370
- CN-Y- 201 146 382
- CN-Y- 201 174 551
- CN-Y- 201 319 504
- CN-Y- 201 319 504
- JP-A- 2011 108 559
- US-A1- 2012 081 827
- US-A1- 2014 204 497

## Description

### BACKGROUND OF THE INVENTION

### 1. Field of the Invention

The present invention relates to a field of low voltage electric apparatus, more particularly, relates to a surge protection device base and to a surge protection device.

### 2. The Related Art

A surge protection device (SPD) is usually used by a technical person in the field to protect overvoltage induced by thunder in a low voltage power distribution system. Generally, it is required to cut off a circuit of the whole system for replacing the surge protection device, so that normal equipment in the system will stop operation, which will cause adverse effects on manufacturing and daily life. Through a pluggable cooperation mode of a pluggable overvoltage protection module and a base for accommodating the protection module, a damaged overvoltage protector may be replaced by replacing the pluggable module without cutting off the circuit of the whole system. The replacement operation is simple and efficient.

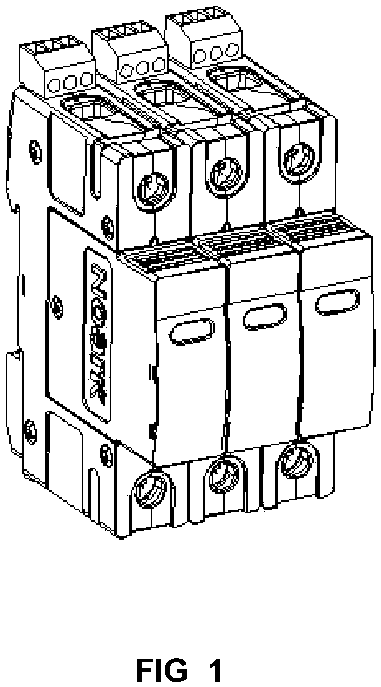

The existing pluggable surge protection devices basically have two types of bases: an integral type and an assembled type. The integral type has a complete structure, good appearance and good structural strength, but different bases corresponding to respective poles need to be developed separately. The integral type has a low repeatability and high cost (the universality of elements is low so that the cost is high). The assembled type only develops a unipolar base, and a multipolar base is formed through mechanical splicing of a plurality of unipolar bases. The assembled type base has obvious gaps between poles and poor integrity, and an external bus bar is required to connect the respective poles. The assembled type is complex in operation and poor in appearance. A multipolar base formed by splicing of unipolar bases has poor integrity and is not able to achieve pre-wiring. Each unipolar base is electrically independent and an external electrical connection is required to connect them to be electrically integral, which would cause troubles to the user during installation and wiring. FIG. 1 illustrates a structural diagram of a multipolar base formed by mechanically splicing a plurality of unipolar bases according to prior art.

JP 2011 108559 A describes an electrical equipment equipped with incorrect connection prevention mechanism composed of a terminal device and a plug connected to the terminal device. In the electrical equipment, a case side incorrect connection prevention piece is mounted on a vertical inner wall of one case vertical portion of facing case vertical portion in the terminal device, a plug side incorrect connection prevention piece is mounted on one vertical side wall of a vertical side wall faced by the plug. In order that the case side incorrect connection prevention piece and the plug side incorrect connection prevention piece are opposed, into a plug fitting recess portion of the terminal device, when the plug is fitted, the case side incorrect connection prevention piece and the plug side incorrect connection prevention piece become to have a normal fitting state.

CN 202 737113 U describes a combined type surge protector connection structure. The combined type surge protector connection structure comprises one-pole type surge protectors, wherein a surge protection module of each one-pole surge protector is respectively assembled in a base of the one-pole type surge protector, a connection end of one end of each base is embedded with a busbar, a side wall of each busbar is sleeved with an insulation sleeve casing, the other end of the base is respectively arranged with an inward concave long groove, fasteners are mounted between the adjacent inward concave long grooves, a connection portion of each busbar and the surge protection module of each one-pole surge protector is respectively arranged with an inward concave circular groove, a caliber of a notch of the inward concave circular groove is smaller than that of the inward concave circular groove, and each inward concave circular groove is locked and connected with the connection end of one end of each base through a locking piece.

### SUMMARY

According to an embodiment of the present invention, a surge protection device base as defined in claim 1 is provided. The surge protection device base comprises a first housing, a second housing and at least one third housing. The first housing comprises at least one first structure. The second housing comprises at least one second structure. The third housing is arranged between the first housing and the second housing and comprises a first half side and a second half side. The first housing, one or more third housings and the second housing are spliced together to form a multipolar surge protection device base. The first housing and the first half side of the third housing adjacent thereto constitute an unipolar surge protection device base, the second half side and the first half side of two adjacent third housings constitute an unipolar surge protection device base, and the second housing and the second half side of the third housing adjacent thereto constitute an unipolar surge protection device base. The first structure corresponds to an element positioned within the first housing and the second half side of the third housing. The second structure corresponds to an element positioned within the second housing and the first half side of the third housing. Through holes are formed in the third housing at corresponding positions, so as to install connected elements used for a multipolar surge protection device. A first through hole formed at a first end of the bottom of the third housing is configured to accommodate a connected bus bar. A second through hole formed at a second end of the bottom of the third housing is configured to accommodate a connected microswitch.

According to an embodiment, the first housing and a first one of the third housings, two third housings, a second one of the third housings and the second housing are spliced with each other through holes-shafts and/or stepped slots.

According to an embodiment, the first structure comprises a microswitch slot which corresponds to a microswitch positioned in the first housing and the second side half of the third housing. The second structure comprises an execution rod slot which corresponds to a remote signaling alarm execution mechanism positioned in the second housing and the first half side of the third housing.

According to the surge protection device base of the present invention, an unipolar or multipolar surge protection device base is directly formed through splicing of different components. When a multipolar base is formed, elements such as wiring terminal, bus bar and microswitch etc. can be installed inside the base of the surge protection device, so that integrality and attractiveness are achieved, and cost is reduced.

The invention also provides a surge protection device as defined in claim 4.

### BRIEF DESCRIPTION OF THE DRAWINGS

The above and other features, natures, and advantages of the invention will be apparent by the following description of the embodiments incorporating the drawings, wherein,
FIG. 1 illustrates a structural diagram of a multipolar base formed by mechanically splicing a plurality of unipolar bases according to prior art.
FIG. 2a and FIG. 2b illustrate a surge protection device base which may form part of a surge protection device base according to an example in the present invention. FIG. 2a and FIG. 2b illustrate a unipolar surge protection device base.
FIG. 3a and FIG. 3b illustrate a surge protection device base according to an embodiment of the present invention. FIG. 3a and FIG. 3b illustrate a multipolar surge protection device base.
FIG. 4 illustrates an exploded structural diagram of a surge protection device base according to an embodiment of the present invention. FIG. 4 illustrates a multipolar surge protection device base.
FIG. 5 illustrates a schematic diagram of accommodation of a bus bar of a surge protection device base according to an embodiment of the present invention.
FIG. 6 illustrates a schematic diagram of accommodation of a microswitch of a surge protection device base according to an embodiment of the present invention.
FIG. 7a and FIG. 7b illustrate schematic diagrams of accommodation of a remote signaling alarm execution mechanism of a surge protection device base according to an embodiment of the present invention.

### DETAILED DESCRIPTION

The invention provides a spliced surge protection device base, a unipolar or multipolar surge protection device base can be directly formed through splicing of components.

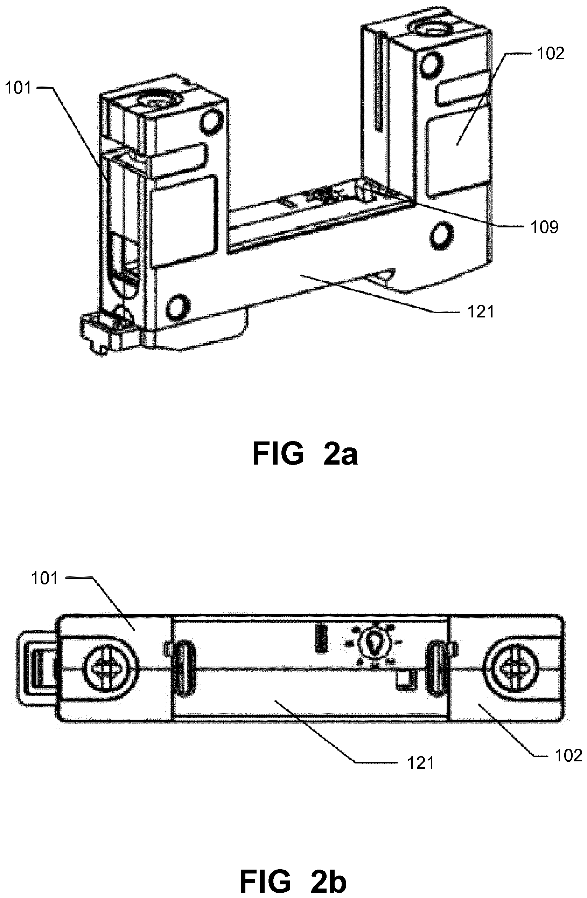

FIG. 2a and FIG. 2b illustrate a surge protection device base which may form part of a surge protection device base according to an example in the present invention. FIG. 2a and FIG. 2b illustrate a unipolar surge protection device base. As shown in FIG. 2a and FIG. 2b, the surge protection device base comprises a first housing 101 and a second housing 102. The first housing 101 and the second housing 102 are spliced together to form a unipolar surge protection device base 121. The first housing 101 and the second housing 102 are combined in a left-right splicing mode to form a complete surge protection base 121. According to an example the first housing and the second housing are spliced with each other through holes-shafts and/or stepped slots. In other examples the first housing and the second housing may be spliced in other manners which are appropriate. Various elements of the surge protection device are accommodated in the surge protection device base 121. Some elements need to be in contact with or connected with external component, so the surge protection device base 121 is provided with structures corresponding to these elements. Because the installation positions of these elements in the surge protection device base are different, the first housing and the second housing are respectively provided with structures corresponding to the elements installed inside the first housing or the second housing. According to an example the first housing 101 is provided with a first structure corresponding to an element positioned within the first housing. The second housing 102 is provided with a second structure corresponding to an element positioned within the second housing.

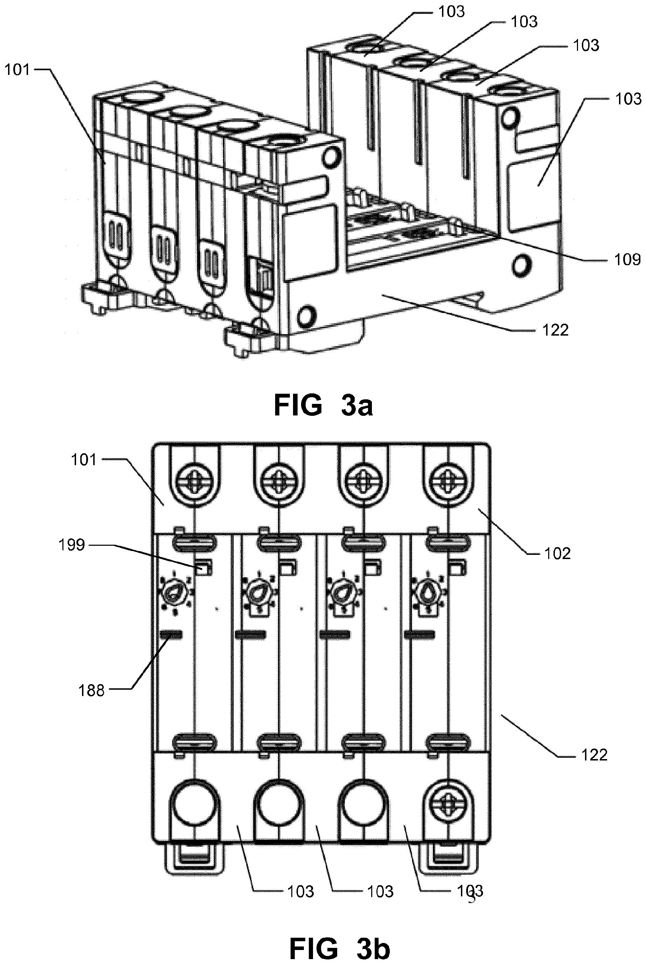

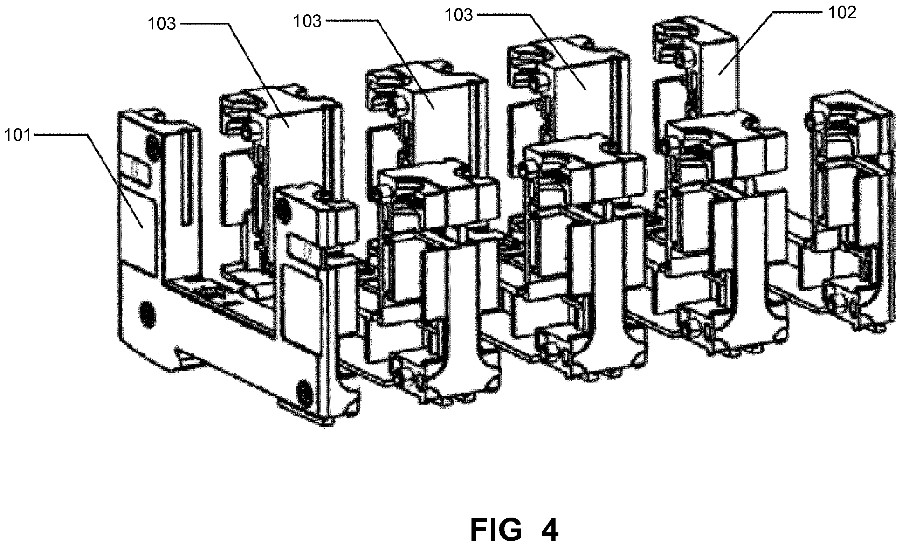

FIG. 3a and FIG. 3b illustrate a surge protection device base according to an embodiment of the present invention. FIG. 3a and FIG. 3b illustrate a multipolar surge protection device base. According to the surge protection device base of the present invention, when a multipolar base is formed, components are assembled directly to form an integrated multipolar base, rather than mechanical splicing of a plurality of unipolar bases. As shown in the drawings, the surge protection device base comprises a first housing 101, a second housing 102 and a third housing 103. One first housing 101, one or more third housings 103 and one second housing 102 are spliced together to form a multipolar surge protection device base 122. Compared with the unipolar surge protection device base shown in FIG. 2a and FIG. 2b, one or more third housings 103 are inserted between the first housing 101 and the second housing 102. The first housing 101 is also provided with at least one first structure, and the second housing 102 is also provided with at least one second structure. The third housing 103 is divided into two half sides: a first half side and a second half side. The third housing 103 is provided with at least one first structure and at least one second structure, the first structure is positioned at the second half side of the third housing while the second structure is positioned at the first half side of the third housing. When splicing is carried out, the first housing and a first half side of the third housing adjacent thereto constitute a unipolar surge protection device base. A second half side and a first half side of the two adjacent third housings constitute a unipolar surge protection device base. And the second housing and a second half side of the third housing adjacent thereto constitute a unipolar surge protection device base. That is, although the third housing is a component itself, it is used to form a unipolar base with adjacent components. The half sides of the third housing can be spliced with the first housing or the second housing respectively to form a unipolar base, or different half sides of two third housings can be spliced to form a unipolar base. FIG. 4 illustrates an exploded structural diagram of a surge protection device base according to an embodiment of the present invention. FIG. 4 illustrates a multipolar surge protection device base.

According to an embodiment, the first housing and the third housing, the two third housings, the third housing and the second housing are spliced with each other through holes-shafts and/or stepped slots. In other embodiment, the first housing and the third housing, the two third housings, the third housing and the second housing may be spliced in other manners which are appropriate.

The first structure positioned on the first housing or the third housing corresponds to an element positioned within the first housing and the second half side of the third housing. For a unipolar base, the first housing and the second half side of the third housing are the same side, so that the elements arranged therein are the same. Also, the second structure positioned on the second housing or the third housing corresponds to an element positioned within the second housing and the first half side of the third housing. For a unipolar base, the second housing and the first half side of the third housing are the same side, so that the elements arranged therein are the same.

In a multipolar surge protection device base formed by splicing, the third housing 103 is always located between the first housing 101 and the second housing 102 and will not be exposed outside, so that through holes can be formed in the third housing 103 to install connected elements for a multipolar surge protection device. The connected elements such as a plurality of microswitches used for a multipolar surge protection device, an integrated bus bar used for a multipolar surge protection device can be installed in the through hole. Connection of the plurality of elements used for the multipolar surge protection device can save the installation cost and reduce the installation difficulty, which can reduce an overall cost. The through holes in the third housing will be shielded by the first housing and the second housing, so that an overall attractiveness will not be influenced by the through holes formed in the third housing.

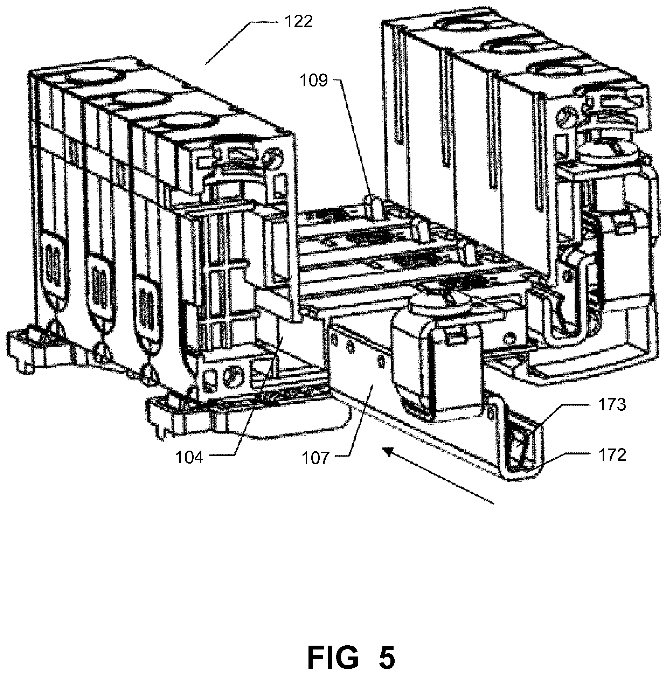

FIG. 5 illustrates a schematic diagram of accommodation of a bus bar of a surge protection device base according to an embodiment of the present invention. A first through hole 104 is formed at a first end of the bottom of the third housing for accommodating a connected bus bar 107. The bus bar 107 is integrated and is formed by processing of an integral metal sheet. A U-shaped structure 172 is formed at the bottom of the bus bar 107, the U-shaped structure 172 accommodates a connector 173 which is used for contacting with a pin. The connector 173 is elastic so as to clamp the pin. Through the first through hole 104, the integrated bus bar 107 can smoothly enter corresponding positions of each polar of the multipolar surge protection device. According to the illustrated embodiment, both ends of the bottom of the third housing are provided with first through holes 104 for accommodating the bus bar. Correspondingly, both ends of the top of the third housing are provided with openings for inserting the pins. The positions of the openings correspond to the positions of the bus bar and the connectors.

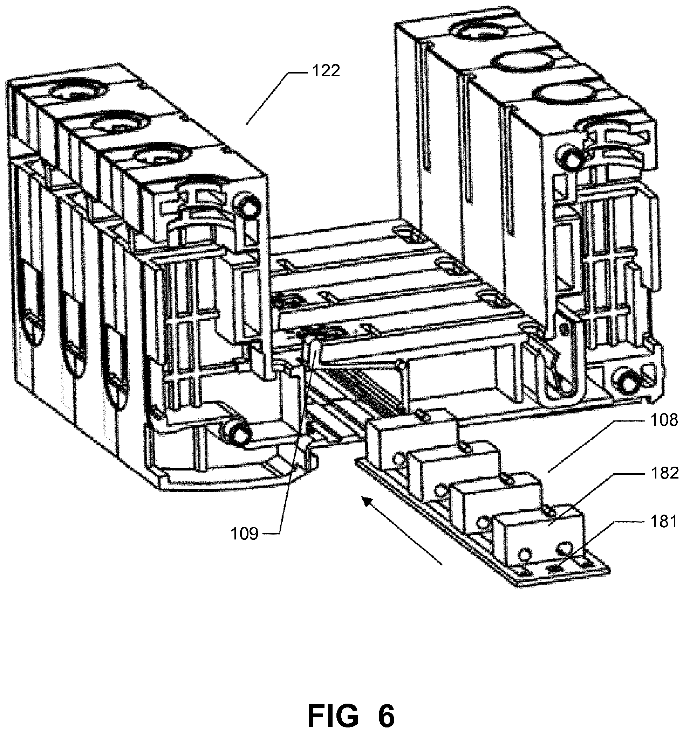

FIG. 6 illustrates a schematic diagram of accommodation of a microswitch of a surge protection device base according to an embodiment of the present invention. A second through hole is formed at a second end of the bottom of the third housing 103 for accommodating a connected microswitch. The connected microswitch constitutes a remote signaling alarm device of the surge protection device. According to the illustrated embodiment, the remote signaling alarm device is composed of a circuit board 181 and microswitches 182, and is connected with wiring terminals through wires. For a multipolar surge protection device, the microswitches 182 for respective poles are mounted on a same circuit board 181, for example, a plurality of microswitches 182 are welded on the circuit board 181. Each microswitch 182 corresponds to the position of the surge protection device of a respective pole. During assembly, the circuit board 181 and the microswitches 182 mounted thereon are integrally loaded into the second through hole. For the surge protection device of each pole, the microswitch 182 is located at a position where the first housing or the second half side of the third housing is located, so that a microswitch slot 188 is formed in the first housing or the second half side of the third housing (refer to FIG. 2b) for accommodating an operation button of the microswitch. The microswitch slot 188 is an example of the so-called first structure.

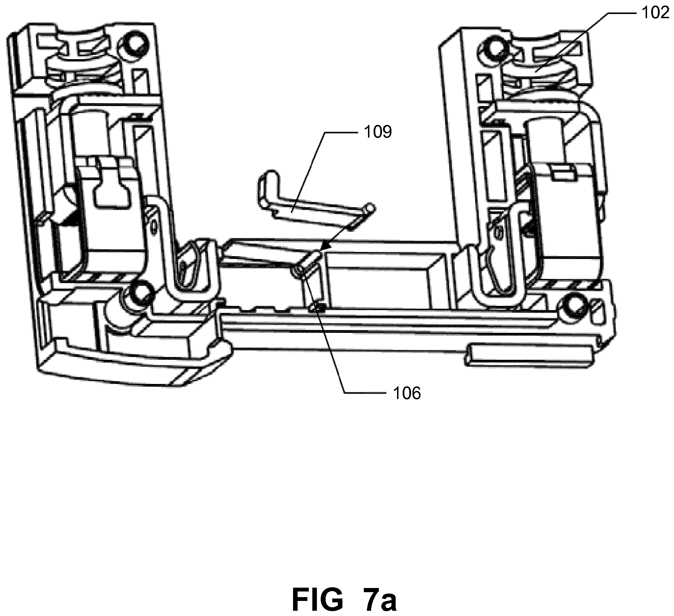

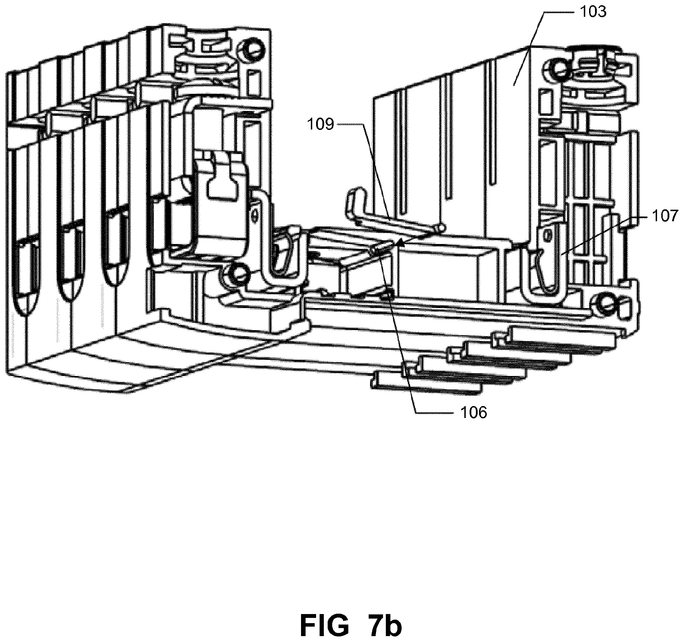

The remote signaling alarm device further comprises an execution mechanism, according to an embodiment, the execution mechanism is an execution rod 109. FIG. 7a and FIG. 7b illustrate schematic diagrams of accommodation of a remote signaling alarm execution mechanism of a surge protection device base according to an embodiment of the present invention. The execution rod 109 is rotatably mounted in a slot hole 106 through a shaft at an end of the execution rod 109. The slot hole 106 is located on the second housing 102 or the first half side of the third housing 103. For example, the slot hole 106 shown in FIG. 7A is located on the second housing 102, and the slot hole 106 shown in FIG. 7B is located on the first half side of the third housing 103. The slot hole 106 is an example of the so-called second structure. The other end of the execution rod 109 forms a protrusion, the position of the protrusion corresponds to an execution rod slot 199 on the housing (see FIG. 2b). When the execution rod 109 rotates about the shaft which is mounted in the slot hole 106, the protrusion will extend out of the execution rod slot 199. The execution rod slot 199 is also an example of the so-called second structure. A working process of the remote signaling alarm device is as follows: an overvoltage protection module is inserted into the base of the surge protection device and a bottom of the overvoltage protection module is in contact with the protrusion of the executing rod 109. When the overvoltage protection module is in a working state, the bottom of the overvoltage protection module applies a force to press down the protrusion of the execution rod 109. The execution rod 109 is pressed down along with the protrusion as well, then the microswitch 182 is pressed down and in an energy storage state. When the overvoltage protection module is pulled out or in a fault state, the bottom of the overvoltage protection module no longer applies the force to the protrusion of the execution rod 109, and the force applied by the execution rod 109 to the microswitch 182 does not exist as well. Then the microswitch 182 is bounced off by the energy stored by itself. The execution rod 109 is lifted upwards and the microswitch 182 is restored to the original position.

According to the surge protection device base of the present invention, a unipolar or multipolar surge protection device base is directly formed through splicing of different components. When a multipolar base is formed, elements such as wiring terminal, bus bar and microswitch etc. can be installed inside the base of the surge protection device, so that integrality and attractiveness are achieved, and cost is reduced.

The above embodiments are provided to those skilled in the art to realize or use the invention, under the condition that various modifications or changes being made by those skilled in the art without departing the principle of the invention, the above embodiments may be modified and changed variously, therefore the protection scope of the invention is not limited by the above embodiments, rather, it should conform to the maximum scope of the innovative features mentioned in the Claims.

## Claims

1. A surge protection device base (122) comprising:
a first housing (101) comprising at least one first structure;
a second housing (102) comprising at least one second structure;
at least one third housing (103) arranged between the first housing (101) and the second housing (102) and comprising a first half side adjacent to the first housing (101) and a second half side adjacent to the second housing (102);
wherein the first housing, one or more third housings (103) and the second housing (102) are spliced together to form a multipolar surge protection device base;
wherein the first housing (101) and the first half side of the third housing (103) adjacent thereto constitute a unipolar surge protection device base, the second half side and the first half side of two adjacent third housings (103) constitute a unipolar surge protection device base, and the second housing (102) and the second half side of the third housing (103) adjacent thereto constitute a unipolar surge protection device base,
wherein:
the first structure corresponds to an element positioned within the first housing (101) and the second half side of the third housing (103),
the second structure corresponds to an element positioned within the second housing (102) and the first half side of the third housing (103),
through holes are formed in the third housing at corresponding positions, so as to install connected elements used for a multipolar surge protection device.
a first through hole (104) formed at a first end of the bottom of the third housing (103) is configured to accommodate a connected bus bar (107), and
a second through hole formed at a second end of the bottom of the third housing (103) is configured to accommodate a connected microswitch (182).

2. The surge protection device base according to claim 1, wherein the first housing (101) a first one of the third housings (103), two third housings (103), a second one of the third housings (103) and the second housing (102) are spliced with each other through holes-shafts and/or stepped slots.

3. The surge protection device base according to claim 1, wherein
the first structure comprises a microswitch slot (188) which corresponds to a microswitch positioned in the first housing (101) and the second side half of the third housing (103);
the second structure comprises an execution rod slot (199) which corresponds to a remote signaling alarm execution mechanism positioned in the second housing (102) and the first half side of the third housing (103).

4. A surge protection device comprising a surge protection device base (122) according to any of claims 1-3, the surge protection device further comprising:
a connected bus bar (107) accommodated in the first through hole (104) formed at the first end of the bottom of the at least one third housing (103); and
a connected microswitch (182) accommodated in the second through hole formed at the second end of the bottom of the at least one third housing (103), and
a circuit board (181),
wherein the connected bus bar (107) is integrated and enters, through the first through hole (104), corresponding positions of each pole of the surge protection device, and wherein connected microswitches (182) for respective poles of the surge protection device are mounted on the circuit board (181) and each connected microswitch (182) corresponds to the position of the surge protection device of a respective pole.

## Patentansprüche

1. Überspannungsschutzvorrichtungsbasis (122) mit:
einem ersten Gehäuse (101) mit mindestens einer ersten Struktur;
einem zweiten Gehäuse (102) mit mindestens einer zweiten Struktur;
mindestens einem dritten Gehäuse (103), das zwischen dem ersten Gehäuse (101) und dem zweiten Gehäuse (102) angeordnet ist und eine erste Halbseite, die dem ersten Gehäuse (101) benachbart ist, und eine zweite Halbseite aufweist, die dem zweiten Gehäuse (102) benachbart ist:
wobei das erste Gehäuse, ein oder mehr dritte Gehäuse (103) und das zweite Gehäuse (102) zur Bildung einer mehrpoligen Überspannungsschutzvorrichtungsbasis zusammengefügt sind;
wobei das erste Gehäuse (101) und die diesem benachbarte erste Halbseite des dritten Gehäuses (103) eine einpolige Überspannungsschutzvorrichtungsbasis bilden, das zweite Gehäuse und die erste Halbseite zweier benachbarter dritter Gehäuse (103) eine einpolige Überspannungsschutzvorrichtungsbasis bilden, und das zweite Gehäuse (102) und die diesem benachbarte zweite Halbseite des dritten Gehäuses (103) eine einpolige Überspannungsschutzvorrichtungsbasis bilden,
wobei:
die erste Struktur einem Element entspricht, das innerhalb des ersten Gehäuses (10) und der zweiten Halbseite des dritten Gehäuses (103) angeordnet ist,
die zweite Struktur einem Element entspricht, das innerhalb des zweiten Gehäuses (102) und der ersten Halbseite des dritten Gehäuses (103) angeordnet ist,
Durchgangslöcher in dem dritten Gehäuse an entsprechenden Positionen ausgebildet sind, um verbundene Elemente, die für eine mehrpolige Überspannungsschutzvorrichtungsbasis verwendet werden, zu installieren,
ein an einem ersten Ende des Bodens des dritten Gehäuses (103) gebildetes erstes Durchgangsloch (104), das dazu ausgebildet ist, eine angeschlossenen Sammelschiene (107) aufzunehmen, und
ein an einem zweiten Ende des Bodens des dritten Gehäuses (103) gebildetes zweites Durchgangsloch, das dazu ausgebildet ist, einen angeschlossenen Mikroschalter (182) aufzunehmen.

2. Überspannungsschutzvorrichtungsbasis nach Anspruch 1, wobei das erste Gehäuse (101), ein erstes der dritten Gehäuse (103), zwei dritte Gehäuse (103), ein zweites der dritten Gehäuse (103) und das zweite Gehäuse (102) über Durchgangslöcher/Schafte und/oder gestufte Schlitze zusammengefügt sind.

3. Überspannungsschutzvorrichtungsbasis nach Anspruch 1, wobei die erste Struktur einen Mikroschalterschlitz (188) aufweist, der einem Mikroschalter entspricht, der in dem ersten Gehäuse (101) und der zweiten Halbseite des dritten Gehäuses (103) angeordnet ist;
die zweite Struktur einen Ausführungsstabschlitz (199) aufweist, der einem Femsignalisierungsalarm-Ausführungsmechanismus entspricht, der in dem zweiten Gehäuse (102) und der ersten Halbseite des dritten Gehäuses (103) angeordnet ist.

4. Überspannungsschutzvorrichtung mit einer Überspannungsschutzvorrichtungsbasis (122) nach einem der Ansprüche 1 - 3, wobei die Überspannungsschutzvorrichtung ferner aufweist:
eine verbundene Sammelschiene (107), die in dem ersten Durchgangsloch (104) aufgenommen ist, das an dem ersten Ende des Bodens des mindestens einen dritten Gehäuses (103) ausgebildet ist; und
einen verbundenen Mikroschalter (182), der in dem zweiten Durchgangsloch aufgenommen ist, das an dem zweiten Ende des Bodens des mindestens einen dritten Gehäuses (103) ausgebildet ist; und
eine Platine (181),
wobei die verbundene Sammelschiene (107) integriert ist und durch das erste Durchgangsloch (104) in entsprechende Positionen jedes Pols der Überspannungsschutzvorrichtung eintritt, und wobei verbundene Mikroschalter (182) für jeweilige Pole der Überspannungsschutzvorrichtung auf der Platine (181) angebracht sind und jeder verbundene Mikroschalter (182) der Position der Überspannungsschutzvorrichtung eines jeweiligen Pols entspricht.

## Revendications

1. Base de dispositif de protection contre les surtensions (122) comprenant :
un premier logement (101) comprenant au moins une première structure ;
un deuxième logement (102) comprenant au moins une deuxième structure ;
au moins un troisième logement (103) disposé entre le premier logement (101) et le deuxième logement (102) et comprenant une première moitié de côté adjacente au premier logement (101) et une deuxième moitié de côté adjacente au deuxième logement (102) ;
dans lequel le premier logement, un ou plusieurs troisièmes logements (103) et le deuxième logement (102) sont assemblés pour former une base de dispositif de protection multipolaire contre les surtensions ;
dans lequel le premier logement (101) et la première moitié de côté du troisième logement (103) qui lui est adjacente constituent une base de dispositif de protection unipolaire contre les surtensions, la deuxième moitié de côté et la première moitié de côté de deux troisièmes logements (103) adjacents constituent une base de dispositif de protection unipolaire contre les surtensions, et le deuxième logement (102) et la deuxième moitié de côté du troisième logement (103) qui lui est adjacente constituent une base de dispositif de protection unipolaire contre les surtensions,
dans lequel :
la première structure correspond à un élément placé dans le premier logement (101) et la deuxième moitié de côté du troisième logement (103),
la deuxième structure correspond à un élément placé dans le deuxième logement (102) et la première moitié de côté du troisième logement (103),
des trous traversants sont formés dans le troisième logement à des endroits correspondants, de manière à installer les éléments connectés utilisés pour un dispositif de protection multipolaire contre les surtensions.
un premier trou traversant (104) formé à une première extrémité du fond du troisième logement (103) est configuré pour recevoir une barre omnibus connectée (107), et
un deuxième trou traversant formé à une deuxième extrémité du fond du troisième logement (103) est configuré pour recevoir un microrupteur connecté (182).

2. Base de dispositif de protection contre les surtensions selon la revendication 1, dans laquelle le premier logement (101), un premier des troisièmes logements (103), deux troisièmes logements (103), un deuxième des troisièmes logements (103) et le deuxième logement (102) sont assemblés entre eux par des arbres perforés et/ou des fentes étagées.

3. Base de dispositif de protection contre les surtensions selon la revendication 1, dans laquelle la première structure comprend une fente de microrupteur (188) qui correspond à un microrupteur positionné dans le premier logement (101) et la deuxième moitié de côté du troisième logement (103) ;
la deuxième structure comprend une fente pour tige d'exécution (199) qui correspond à un mécanisme d'exécution d'alarme de signalisation à distance placé dans le deuxième logement (102) et la première moitié de côté du troisième logement (103).

4. Dispositif de protection contre les surtensions comprenant une base de dispositif de protection contre les surtensions (122) selon l'une des revendications 1 à 3, le dispositif de protection contre les surtensions comprenant en outre :
une barre omnibus connectée (107) logée dans le premier trou traversant (104) formé à la première extrémité du fond de l'au moins un troisième logement (103) ; et
un microrupteur connecté (182) logé dans le deuxième trou traversant formé à la deuxième extrémité du fond de l'au moins un troisième logement (103), et
une carte de circuit imprimé (181),
dans lequel la barre omnibus connectée (107) est intégrée et entre, par le premier trou traversant (104), dans des positions correspondantes de chaque pôle du dispositif de protection contre les surtensions, et dans lequel des microrupteurs connectés (182) pour les pôles respectifs du dispositif de protection contre les surtensions sont montés sur la carte de circuit imprimé (181) et chaque microrupteur connecté (182) correspond à la position du dispositif de protection contre les surtensions d'un pôle respectif.
